# FASCICULE DE BREVET EUROPEEN

(11) **EP 1 773 471 B1**
(45) Date de publication et mention de la délivrance du brevet: **03.02.2010**
(21) Numéro de dépôt: 05776443.3
(22) Date de dépôt: 16.06.2005
(51) Int. Cl.: B01D 53/047, B01D 53/22

(54) **INSTALLATION DE PRODUCTION D'OXYGENE DE HAUTE PURETE**
INSTALLATION ZUR PRODUKTION HOCHREINEN SAUERSTOFFS
INSTALLATION FOR PRODUCING OXYGEN OF HIGH PURITY

(30) Priorité: 28.07.2004 FR 0451678
(43) Date de publication de la demande: 18.04.2007
(73) Titulaire: L'AIR LIQUIDE, Société Anonyme pour l'Etude et l'Exploitation des Procédés Georges Claude, 75007 Paris (FR)
(72) Inventeur: VANDROUX, Olivier, F-38000 GRENOBLE (FR); GUILBAUD, Eric, AIR LIQUIDE SPATIAL, KOUROU CEDEX 97388 (GF); TOUVARD, Frédéric, F-38240 MEYLAN (FR); SCHMUTZ, Nicolas, 75006 PARIS (FR); BALLAND, Lionel, F-38690 COLOMBE (FR)
(74) Mandataire: De Cuenca, Emmanuel Jaime
(86) Numéro de dépôt international: PCT/FR2005/050448
(87) Numéro de publication internationale: WO 2006/018558

(56) Documents cités:
- EP-A- 0 312 743
- EP-A- 0 537 612
- EP-A- 0 858 826
- MERCEA P V ET AL: "OXYGEN SEPARATION FROM AIR BY A COMBINED PRESSURE SWING ADSORPTION AND CONTINUOUS MEMBRANE COLUMN PROCESS" JOURNAL OF MEMBRANE SCIENCE, ELSEVIER SCIENTIFIC PUBL.COMPANY. AMSTERDAM, NL, vol. 88, no. 2/3, 16 mars 1994 (1994-03-16), pages 131-144, XP000488341 ISSN: 0376-7388

## Description

La présente invention concerne les installations de production on-site d'oxygène de haute pureté convenant en particulier pour des sites de consommation isolés ou difficilement approvisionnables en oxygène haute pureté conditionné.

Les dispositifs de séparation de gaz par adsorption de type PSA permettant, en configuration monoétage, de produire de l'oxygène à une pureté n'excédant pas 95 %, il a été proposé, pour des installations sur site ou embarquées, des systèmes avec, en cascade, au moins un dispositif de séparation de gaz par adsorption de type PSA couplé à un autre PSA ou à un dispositif de séparation de gaz par perméation. Les dispositifs connus présentent des rendements énergétiques assez faibles et sont de mise en oeuvre délicate.

EP 0 858 826 A2 décrit une installation de production d'oxygène comprenant une section avec au moins deux étages membranaires afin de purifier l'oxygène généré dans une unité de PSA ou de VPSA.

L'article "Oxygen separation from air by a combined pressure swing adsorption and continuous membrane column process", P.V. Merca, S.T. Hwang, Journal of Membrane Science, 88 (1994), pp. 131-144, décrit une installation de production d'oxygène avec une première étape d'adsorption suivie de deux membranes.

La présente invention a pour objet de proposer une installation capable de fournir de l'oxygène à une pureté atteignant ou dépassant 99,5 %, de mise en oeuvre aisée, permettant de ce fait une intégration facilitée sur site, notamment une grande standardisation des sous-composants permettant de réduire les coûts, et présentant un rendement énergétique satisfaisant.

Pour ce faire, selon une caractéristique de l'invention, l'installation comprend :
- un premier dispositif de séparation de gaz par adsorption ayant une première entrée, typiquement connectable à une source d'air sous pression, et une deuxième sortie, et contenant au moins un adsorbant capable de retenir l'azote ;
- un deuxième dispositif de séparation de gaz par adsorption ayant une deuxième entrée reliée à la première sortie et une deuxième sortie, et contenant au moins un adsorbant capable de retenir l'argon ; et
- dans une branche d'une boucle entre la première sortie et la deuxième entrée, un dispositif de séparation de gaz par perméation comportant au moins une membrane capable de séparer l'oxygène de l'argon et ayant une troisième entrée reliée à la deuxième entrée et une sortie d'oxygène reliée à la première sortie du premier dispositif de séparation.

Selon d'autres caractéristiques de l'invention:
- l'installation comprend un compresseur d'oxygène disposé dans la boucle, entre la première sortie et la deuxième entrée ou entre la sortie d'oxygène et la première sortie ;
- l'adsorbant du premier dispositif de séparation comprend au moins une zéolithe, typiquement une zéolithe X, avantageusement une zéolithe LiX, l'adsorbant du deuxième dispositif de séparation comprenant au moins un tamis carboné ;
- l'installation est installée opérationnellement dans un conteneur de transport standardisé.

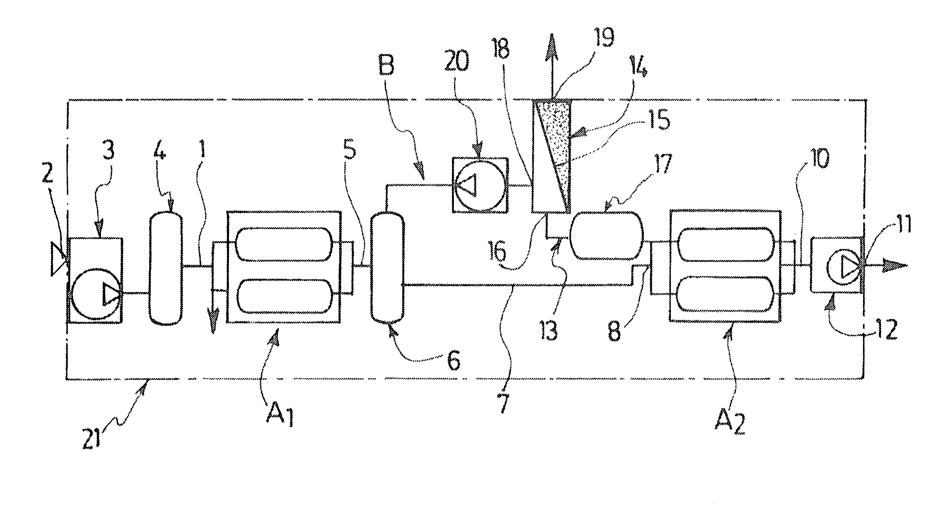

D'autres caractéristiques et avantages de l'invention ressortiront de la description suivante d'un mode de réalisation, donné à titre illustratif mais nullement limitatif, faite en relation avec le dessin annexé, sur lequel :
la figure unique représente schématiquement un mode de réalisation d'une installation selon l'invention intégré dans une enveloppe transportable.

Sur la figure unique on reconnaît un premier dispositif de séparation de gaz par adsorption de type PSA A₁ à tamis zéolithique ayant une entrée 1 d'air comprimé fourni, à partir d'une entrée d'air atmosphérique 2, par un ensemble de compression basse pression/filtration et séchage 3 via, typiquement, un réservoir d'air tampon 4.

Le dispositif de séparation A₁ comporte une sortie de mélange enrichi en oxygène 5 débitant dans une capacité d'oxygène tampon 6 reliée, via une ligne 7, à l'entrée 8 d'un deuxième dispositif de séparation de gaz par adsorption de type PSA A₂ à tamis carboné comportant une sortie d'oxygène 10 connectable à un circuit utilisateur externe 11 via un compresseur d'oxygène 12, typiquement haute pression.

Le premier dispositif de séparation de gaz A₁ comprend au moins un, typiquement au moins deux adsorbeurs comportant au moins un tamis zéolithique de type X, avantageusement une zéolithe au lithium LiX, pour fournir en sortie 5 un oxygène à une pureté entre 94 et 95 %.

Le second dispositif de séparation de gaz par adsorption A₂ comporte, pour sa part, au moins un, typiquement au moins deux adsorbeurs comportant chacun au moins un tamis carboné capable de séparer l'argon résiduaire de l'oxygène enrichi transmis par la ligne 7 pour fournir, en sortie 10, un oxygène à une pureté d'environ 99,5%.

Selon l'invention, la ligne 7 est intégrée dans une boucle B comprenant une branche 13 s'étendant, en parallèle à la ligne 7, entre l'entrée 8 du deuxième dispositif de séparation 9 et la sortie 5 du premier dispositif de séparation 1, typiquement via un second raccordement à la capacité 6.

Selon un aspect de l'invention, la branche 13 inclut un dispositif de séparation de gaz par perméation 14 comprenant au moins une membrane perméable 15 capable de séparer l'oxygène de l'argon, par exemple un faisceau de membranes polymériques commercialisé par la Société américaine MedAl, Wilmington USA, sous la référence « fibre type C ou D ». Le dispositif de séparation membranaire 14 comporte une entrée 16 reliée, typiquement via une capacité tampon de gaz de purge 17, à l'entrée du deuxième dispositif de séparation 9, une sortie d'oxygène 18 et une sortie 19 de gaz de purge constitué majoritairement d'argon.

Selon un aspect de l'invention, un compresseur d'oxygène Moyenne Pression 20 est disposé dans la boucle B, entre la sortie d'oxygène 18 du dispositif de perméation 14 et la capacité tampon 6, comme dans le mode de réalisation représenté, ou, en variante, dans la ligne 7, entre l'entrée 8 du deuxième dispositif de séparation 9 et la capacité tampon 6, cette dernière étant, dans ce cas, reliée directement à la sortie d'oxygène 18 de dispositif de perméation 14.

Dans un mode de réalisation concret, pour une pression d'air d'alimentation d'environ 6,5 bars à l'entrée 1 et un débit d'oxygène moyenne pression d'environ 20 Nm³/h à la sortie 5, le compresseur 20 est dimensionné pour fournir en sortie 10 un débit d'oxygène haute pureté d'environ 6 Nm³/h à une pression de service d'environ 3,5 bars.

Selon un aspect de l'invention, les principaux constituants 3, 1, 9, 12, 14, 20 sont réalisés sous la forme de structures individuelles autoporteuses comportant des entrées/sorties de fluide standardisées et disposées, comme les capacités 4, 6 et 17 dans une enveloppe à rigidité de forme transportable 21, typiquement un conteneur maritime ISO 12 m (40 pieds), pour standardiser l'assemblage et faciliter l'acheminement et la mise en place sur site de l'installation, notamment dans le cadre d'opérations sanitaires, dans des contrées ravagées, pour la fourniture d'oxygène médical.

## Revendications

1. Installation de production d'oxygène de haute pureté comprenant :
- un premier dispositif de séparation de gaz par adsorption (A₁) ayant une première entrée (1) et une première sortie (5) et contenant au moins un adsorbant capable de retenir l'azote ;
- un second dispositif de séparation de gaz par adsorption (A₂) ayant une deuxième entrée (8) reliée à la première sortie (5), et une deuxième sortie (10) et contenant au moins un adsorbant capable de retenir l'argon ; et
- dans une branche d'une boucle (B) entre la première sortie (5) et la deuxième entrée (8), un dispositif de séparation de gaz par perméation (14) comportant au moins une membrane (15) capable de séparer l'oxygène de l'argon, ayant une troisième entrée (16) reliée à la deuxième entrée (8) et une sortie d'oxygène (18) reliée à la première sortie (5).

2. Installation selon la revendication 1, comprenant un compresseur d'oxygène (20) disposé dans la boucle (B).

3. Installation selon la revendication 2, où le compresseur d'oxygène (20) est disposé entre la première sortie (5) et la deuxième entrée (8).

4. Installation selon la revendication 2, où le compresseur d'oxygène (20) est disposé entre la sortie d'oxygène (18) et la première sortie (5).

5. Installation selon l'une des revendications précédentes, comprenant un ensemble compresseur d'air basse pression (3) relié à la première entrée (1).

6. Installation selon l'une des revendications précédentes, comprenant en outre un compresseur d'oxygène (12) en aval de la deuxième sortie (10).

7. Installation selon l'une des revendications précédentes, **caractérisée en ce que** l'adsorbant du premier dispositif de séparation (A₁) comprend au moins une zéolithe.

8. Installation selon l'une des revendications précédentes, dans laquelle l'adsorbant du deuxième dispositif de séparation (A₂) comprend au moins un tamis carboné.

9. Installation selon l'une des revendications précédentes, **caractérisée en ce qu'**elle est installée opérationnellement dans un conteneur de transport (21).

## Claims

1. Installation for producing high-purity oxygen comprising:
- a first adsorption gas separation device (A₁) having a first inlet (1) and a first outlet (5) and containing at least one adsorbent capable of retaining nitrogen;
- a second adsorption gas separation device (A₂) having a second inlet (8) connected to the first outlet (5), and a second outlet (10) and containing at least one adsorbent capable of retaining argon; and
- in a branch of a loop (B) between the first outlet (5) and the second inlet (8), a permeation gas separation device (14) consisting of at least one membrane (15) capable of separating oxygen from argon, having a third inlet (16) connected to the second inlet (8) and an oxygen outlet (18) connected to the first outlet (5).

2. Installation according to Claim 1, comprising an oxygen compressor (20) placed in the loop (B).

3. Installation according to Claim 2, where the oxygen compressor (20) is placed between the first outlet (5) and the second inlet (8).

4. Installation according to Claim 2, where the oxygen compressor (20) is placed between the oxygen outlet (18) and the first outlet (5).

5. Installation according to one of the preceding claims, comprising a low-pressure air compressor assembly (3) connected to the first inlet (1).

6. Installation according to one of the preceding claims, furthermore comprising an oxygen compressor (12) downstream of the second outlet (10).

7. Installation according to one of the preceding claims, **characterized in that** the adsorbent of the first separation device (A₁) comprises at least one zeolite.

8. Installation according to one of the preceding claims, in which the adsorbent of the second separation device (A₂) comprises at least one carbon-based molecular sieve.

9. Installation according to one of the preceding claims, **characterized in that** it is operationally installed in a shipping container (21).

## Patentansprüche

1. Anlage zur Erzeugung von hochreinem Sauerstoff, die enthält:
- eine erste Vorrichtung zur Gastrennung durch Adsorption (A₁) mit einem ersten Eingang (1) und einem ersten Ausgang (5), und die mindestens ein Adsorptionsmittel enthält, das Stickstoff zurückhalten kann;
- eine zweite Vorrichtung zur Gastrennung durch Adsorption (A₂) mit einem zweiten Eingang (8), der mit dem ersten Ausgang (5) verbunden ist, und mit einem zweiten Ausgang (10), und die mindestens ein Adsorptionsmittel enthält, das Argon zurückhalten kann; und
- in einem Zweig einer Schleife (B) zwischen dem ersten Ausgang (5) und dem zweiten Ausgang (8), eine Vorrichtung zur Gastrennung durch Permeation (14), die mindestens eine Membran (15) aufweist, die den Sauerstoff vom Argon trennen kann, mit einem dritten Eingang (16), der mit dem zweiten Eingang (8) verbunden ist, und mit einem Sauerstoffausgang (18), der mit dem ersten Ausgang (5) verbunden ist.

2. Anlage nach Anspruch 1, die einen Sauerstoffkompressor (20) enthält, der in der Schleife (B) angeordnet ist.

3. Anlage nach Anspruch 2, bei der der Sauerstoffkompressor (20) zwischen dem ersten Ausgang (5) und dem zweiten Eingang (8) angeordnet ist.

4. Anlage nach Anspruch 2, bei der der Sauerstoffkompressor (20) zwischen dem Sauerstoffausgang (18) und dem ersten Ausgang (5) angeordnet ist.

5. Anlage nach einem der vorhergehenden Ansprüche, die eine Niederdruck-Luftkompressoreinheit (3) enthält, die mit dem ersten Eingang (1) verbunden ist.

6. Anlage nach einem der vorhergehenden Ansprüche, die weiter einen Sauerstoffkompressor (12) hinter dem zweiten Ausgang (10) enthält.

7. Anlage nach einem der vorhergehenden Ansprüche, **dadurch gekennzeichnet, dass** das Adsorptionsmittel der ersten Trennvorrichtung (A₁) mindestens einen Zeolith enthält.

8. Anlage nach einem der vorhergehenden Ansprüche, bei der das Adsorptionsmittel der zweiten Trennvorrichtung (A₂) mindestens ein kohlenstoffhaltiges Sieb enthält.

9. Anlage nach einem der vorhergehenden Ansprüche, **dadurch gekennzeichnet, dass** sie betriebsmäßig in einem Transportcontainer (21) installiert ist.
